# EUROPEAN PATENT APPLICATION

(11) **EP 1 255 413 A2**
(43) Date of publication of application: **06.11.2002**
(21) Application number: 02252040.7
(22) Date of filing: 21.03.2002
(51) Int. Cl.: H04Q 3/66, H04M 7/00

(54) **Method of adapting a characteristic of a call server**

(30) Priority: 30.04.2001 US 846095
(71) Applicant: Nortel Networks Limited, St. Laurent, Quebec H4S 2A9 (CA)
(72) Inventor: Scott, Frank, Brampton, Ontario L6V 2M7 (CA); Parton, William, London SW22 2HJ (GB)
(74) Representative: Ryan, John Peter William

(57) **Abstract**

A method of adapting the characteristics of a call server (112) to optimise the call server's performance and usage of available network resources. A network management element (150) determines the impact of any changes in the condition of the network (120) on the call server (112) and provides an indication to the call server (112) which resets at least one characteristic of the call server (112) to optimise the call server's performance.

## Description

### BACKGROUND TO THE INVENTION

The invention relates to a method of adapting a characteristic of a call server. Particularly but not exclusively, to a method of adapting a characteristic of a call server to optimise the call server's usage of available network resources.

A call server is a media gateway controller (MGC). A call server is capable of determining ingress/egress gateways and of providing instruction to selected gateways on the required inter-gateway connection. Media gateway controllers and their functionality are described in detail in the IETF RFC No. 3015, MEGACO, which can be read on the IETF web-site (url: - http://www.ietf.org/rfc/rfc3015.txt?number=3015). An example of a call server is Nortel's DMS™ Call Server 2K call processing engine.

Conventionally, a call server does not receive any indication of the current network state from network elements such as gateways or network management server(s). Although an inter-gateway connection is established between an ingress gateway and an egress gateway in response to a connection request sent by a call server, the call server itself does not provide any routing instructions regarding the path of the inter-gateway connection. Instead, the level of complexity of the connection path is determined by the characteristics of the intermediate network, i.e., in a packet-switched network, the characteristics of the packet backbone network.

This method of establishing a gateway inter-connection has several disadvantages, particularly in the event that the gateways are not able to process the call server's requests. If this is the case, the gateways will respond by sending the call server a Negative ACKnowledgement (a "NACK"). As the gateways themselves have a limited knowledge of network conditions, the NACK normally does not contain any indication why the connection could not be established. The call server responds to a NACK by moving down through a predetermined series or "list" of alternative routes until a connection can be established.

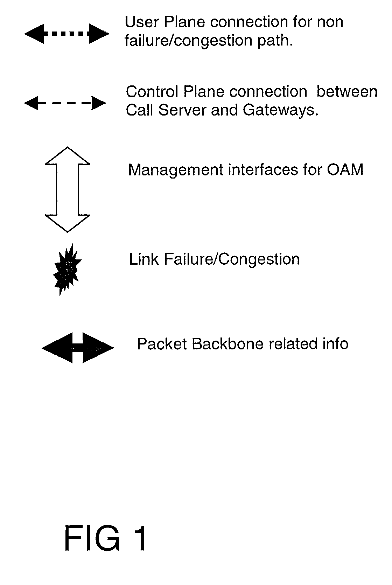

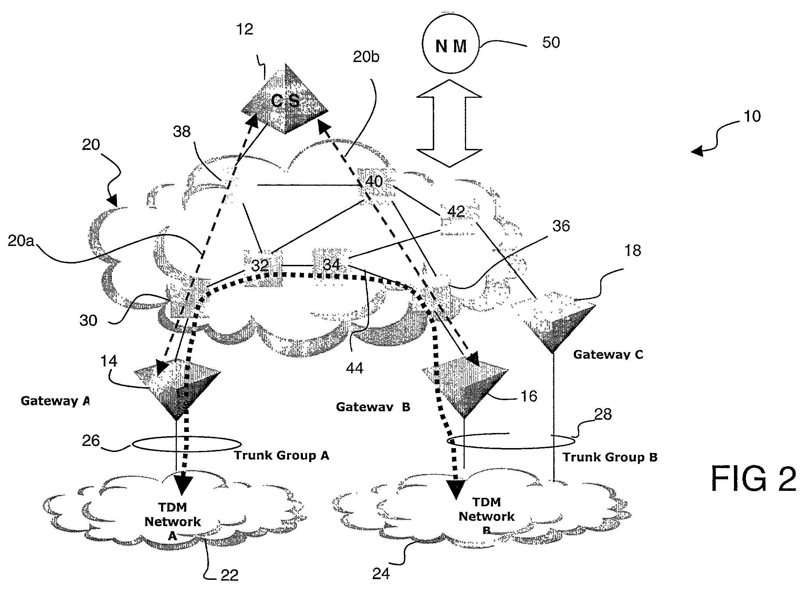

As an example of such a scenario, Fig 2 of the accompanying drawings illustrates a communications network 10. The symbols used in Fig. 2 are explained by the key shown in Fig. 1.

In Fig. 2, the network 10 has a call server 12 which is able to communicate with gateway 14, gateway 16, and gateway 18 across the packet backbone 20 of the network 10. In Fig. 2 a call is established over the packet backbone 20 via network nodes 30, 32, 34, 36. Each gateway 14, 16, 18, enables the call server 12 to communicate over time division multiplexed (TDM) networks 22, 24. Gateway 14 accesses TDM network 22 via trunk group 26. Gateways 16 and 18 access TDM network 24 via trunk group 28. Network management element 50 presides over the network 10 and is able to monitor and/or control certain aspects of the network 10.

Conventionally, a call server 12 is able to determine the service state of a termination end points of the gateways 14,16,18 i.e., it is aware of the service state of the trunk group members. However, conventionally, the call server 12 has no knowledge of the condition of the packet backbone, and so the call server 12 is not able, for example, to determine the available bandwidth between gateway 14 and gateway 16 across the packet backbone 20a using the user plane connection path illustrated by the dashed line in Fig. 1.

In the event that a link 44 between nodes 34 and 36 suffers from congestion, a conventional network scenario is for the call server to initially request gateways 14, 16 to provide an inter-gateway connection via control plane connections 20a, 20b in order for traffic from trunk group 26 to reach trunk group 28.

The gateways 14, 16 are unable to establish sufficient bandwidth for this connection due to the condition of link 44, and an alternative connection is established along an alternative route. In a conventional network, this re-routing is totally transparent to the call server 12 as well as the gateways 14, 16, and relies on the presence of sophisticated network routing protocols for the packet backbone.

The network management element 50 has visibility of the packet backbone activity (for example, alarms or logs etc.) and so is aware of the condition of link 44 unlike the call server 12. However, the control plane connections 20a, 20b over the packet backbone between the call server 12 and the gateways 14, 16 do not provide any information relating to the adjusted user connection path. Thus, as the call server 12 is unaware of the location of the condition, it may try to use gateway 16 again when seeking to reestablish the call in a conventional network scenario.

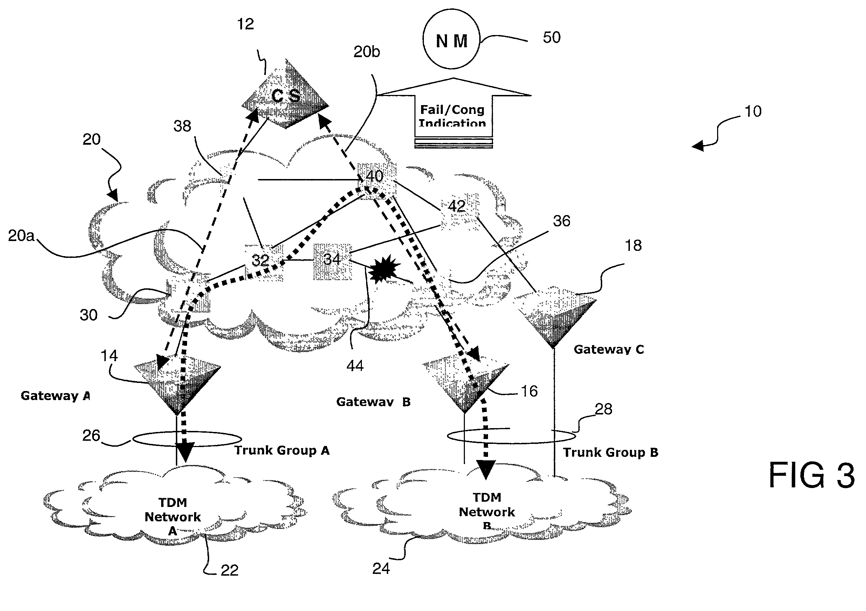

Conventionally therefore, it is possible that if a link failure or congestion condition such as that considered along link 44 in Fig. 2 occurs, the user plane connection can be appropriately adjusted to reroute calls already in progress. The adjusted route could be via gateway 14, nodes 30, 32, 40, and 42, and gateway 16. An example of such an adjusted route is shown in Fig. 3 of the drawings (described in more detail hereinbelow). In Fig. 3, a thick dotted line represents the adjusted route user plane connection path 32. The adjusted user plane connection thus avoids the congested/ failed link 44.

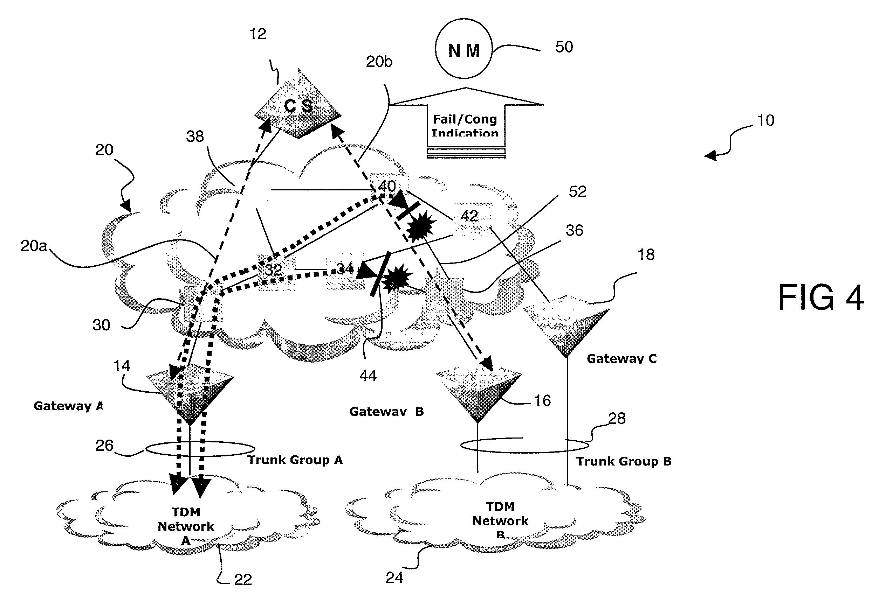

In the event that the packet backbone is unable to establish a user plane connection, the call server is unable to establish the call. Such a scenario is shown schematically in Fig. 4 of the accompanying drawings, where like elements to the elements referred to in Figs. 2 and 3 retain the same numbering scheme. The scenario shown in Fig. 4 reflects the case where an extreme packet backbone failure or congestion event occurs.

In Fig. 4, the Packet Backbone is not able to establish a user plane connection as link failure/congestion has occurred between nodes 34 and 36 and also between node 36 and 40. When the network experiences such a condition, a Negative Acknowledgement (NACK) is generated in the case of connection oriented Packet Backbone (for example, ATM), which provides the call server with feedback of the failure of the gateways to establish the inter-gateway connection. However, in the case where the packet backbone is connectionless, e.g. as in current IP transport, no NACK is generated.

In a connectionless packet backbone scenario, even if the initial attempt by the Call Server to establish a connection succeeds, the two gateways (once set up at each end) will attempt to verify the inter-gateway communications path with "heartbeat" messages (i.e. repeated periodic messages to indicate the presence of a path). If the path isn't established, the heartbeat will fail and the Gateway will send a "call failure" indication to the call server. Some gateways are smart enough to send these heartbeat messages prior to the initial ACK (acknowledgement), however, in which case the resulting behaviour could be the same as the ATM connection-oriented case.

In any case, in the scenario contemplated in Fig. 4, the net result is that the caller attempt will fail, and the Call Server has to take some action. The action that the Call Server takes will be dependent on its internal call state mechanisms (and provision data). Two options are as follows:
Firstly, the Call Server repeatedly attempts the call based on the same trunk group member and may possibly fail again, depending on the dynamics of the problem (this is known as trunk reselection).
Secondly, the Call Server can try another trunk route (known as route list advance). The call server then moves down to the next predetermined route in its routing algorithm to try to access trunk group 28. Until the call server has moved down its list to the point where gateway 18 is present on the proposed route, the call cannot be successfully established.
Both of these techniques are highly inefficient, and add to delay and network overhead.

### SUMMARY OF THE INVENTION

The invention seeks to mitigate and/or obviate the above disadvantages by enabling the characteristics of the call server to be modified in response to the condition of the network.

The invention further seeks to mitigate and/or obviate the above disadvantages by providing a method of mitigating the effect of congestion between a plurality of gateways used by a call server.

The invention further seeks to mitigate and/or obviate the above disadvantages by providing technology which can be used in a packet telephony network environment and which enables a characteristic of the call server to be adapted to accommodate transient or steady state changes in the underlining packet backbone infrastructure.

The invention further seeks to mitigate and/or obviate the above disadvantages by enabling the routing algorithm of a call server to be modified by a network management application which is able to determine traffic levels and congestion states over the network. By enabling the network management to alter the rules by which the call server selects a route over the packet backbone to avoid congested gateways, for example, bandwidth can be utilised more efficiently across the network.

A first aspect of the invention seeks to provide a method of adapting a routing algorithm used by a call server connected to a communications network comprising the steps of:
detecting a change in at least one condition of the communications network;
analyzing the change to determine whether the routing algorithm requires adaptation to accommodate said change; and, in the case of the routing algorithm requiring adaptation,
providing an indication of the required adaptation to the call server; and
receiving the indication at the call server and adapting the routing algorithm used by the call server in response to said indication.

Advantageously, by modifying the routing algorithm a call server uses to connect trunk groups across the network, trunk groups can be connected more efficiently in the event that a connection over the network to a specific gateway to one trunk group suffers a degradation in condition.

Preferably, in the step of providing an indication of the required adaptation, the indication provides an indication of at least one rule governing the routing algorithm which is to be adapted. Preferably, in the step of analyzing the change in condition, the change in the level of congestion over the network is analyzed.

Advantageously, by modifying a rule of the routing algorithm, the call server is able to process connection requests more efficiently by routing traffic through available gateways.

In the step of analyzing the change in condition, the change in the topology of the network may be analyzed. Preferably, in the step of analyzing the change in condition, the change in the available bandwidth over at least a portion of the network analyzed.

Advantageously, this enables connections to be made more quickly as the call server will no longer attempt to connect calls via unavailable gateways or along congested or failed links.

The step of analyzing said change is performed and the step of providing the indication may occur dynamically. The step of analyzing said change may include assessing the impact of the change in the at least one condition on the future condition of the network.

The at least one condition may occur on the packet backbone of the communications network.

Preferably, the method of the first aspect enables the call server to use available network resource more efficiently.

Advantageously, by providing the call server with an indication which enables the call server to use available network resources, connections can be made by the call server which avoid network resources which are unavailable.

Preferably, in the step of detecting a change in the condition of a communications network, the type of traffic affected by the change in condition is determined. Preferably, the indication provides sufficient information for the call server to efficiently utilize available network resources for said type of traffic affected by the change.

The type of data may be determined by the bandwidth of the data.

Advantageously, the invention can enable a call server seeking to route high volume traffic, e.g. a high bandwidth packet, to route the traffic more efficiently. The call server is able to route traffic via the most accessible gateway for such traffic and so avoid gateways which are only accessible via congested links, or low capacity links.

Preferably, the network is a packet backbone network and the type of data is determined by packet size.

The condition of the communication network may include a condition of a gateway of the network.

According to a second aspect of the invention there is provided a method of modifying at least one characteristic of a call server in a communications network which includes a network management element capable of monitoring a condition of the network, the method comprising:
generating an indication of the condition of the network providing sufficient information for the call server to utilise available network resources;
sending the indication to the call server;
receiving at the call server the indication of the condition of the network; and
modifying said at least one characteristic in accordance with said indication to enable the call server to utilise the available network resources.

Advantageously, this enables any characteristic of any call server to be altered to adapt the call server to the prevailing network conditions. As call servers from various vendors may have different characteristics, depending on the capabilities of the specific Call Server, other functions influencing routing may require modification.

Preferably, in the step of generating the indication, the condition of the network monitored by the network management element is provided by the network management element in a suitable form to the call server to receive.

The method may further comprise the initial step of the call server requesting information from the network management element.

Advantageously, this ensures that a call server is able to receive sufficient information for the call server to efficiently utilise available network resources.

The method may further comprise the initial step of the call server requesting information from the network management element, and the step of the network management element polling at least part of the network to determine the condition of said at least part of the network.

The network management element may poll the network periodically to determine the condition of the network. The network management element may provide an indication to the call server subsequently. Alternatively, the network management element may provide an indication to the call server whenever a change in the network condition is determined.

The network management element may provide the indication dynamically in response to a change in the condition of the network being notified to the network management element.

Preferably, in the step of generating the indication, at least one informational element is provided which relates to a rule determining said at least one characteristic of the call server to be modified.

The condition may be taken from the group including:
a topological condition, a failure condition, and a fault condition.

Preferably, said at least one characteristic relates to a route influencing function of the call server. Preferably, said at least one characteristic is taken from the group including:
a routing algorithm of the call server; a trunk selection algorithm of the call server; a call carrying capacity of the call server.

The communication network may be a packet backbone network.

The indication may provide an indication of at least one rule governing the routing algorithm which is to be adapted.

The network may be a packet backbone network and said at least one characteristic of the call server may include a routing algorithm. In the step of generating the indication, at least one informational element may be provided which indicates at least one rule to be adapted according to the condition of the network. The rule may be used in said routing algorithm to determine which gateways the call server shall to use to connect a plurality of trunk groups over the packet backbone network.

A third aspect of the invention relates to a network management element capable of determining a condition of a communications network and capable of communicating said condition with a call server connected to the network for use in a method according to the first aspect of the invention, the network management element being adapted to correlate information received from a packet backbone network relating to the condition of the network with an instruction set comprising at least one informational element, each informational element providing an instruction to a call server to modify at least one of the characteristics of the call server so as to optimise the manner in which the call server utilises the available resources of the packet backbone network.

A fourth aspect of the invention relates to a network management element capable of determining a condition of a communications network and capable of communicating said condition with a call server connected to the network for use in a method according to the second aspect of the invention, the network management element being adapted to correlate information received from a packet backbone network relating to the condition of the network with an instruction set comprising at least one informational element, each informational element providing an instruction to a call server to modify at least one of the characteristics of the call server so as to optimise the manner in which the call server utilises the available resources of the packet backbone network.

Advantageously, by providing a Network Management element which is capable of correlating information on the condition of the network in order to instruct the Call Server to modify at least one of its characteristics, the performance of the call server may be improved and the call server may be able to use the available network resources more efficiently. For example, the network management may provide an indication to the call server such that the call server modifies its routing algorithm to minimises the call failure rate or alternatively to provide an indication of other characteristics which are to be adjusted under certain other network conditions.

A fifth aspect of the invention relates to a call server adapted for use in a method according to either the first or second aspects of the invention. The call server may include: a receiving element for interfacing with said indication; an processing element for processing information provided by said indication; and a routing algorithm adapting element for adapting said routing algorithm.

A sixth aspect of the invention relates to a routing algorithm for a call server adapted for use in a method according to the first aspect, the routing algorithm operable in accordance with a set of rules which determine route selection over a communication network, at least one rule capable of being adapted in response to the call server receiving an indication relating to the adaptation of the said at least one rule.

Preferably, at least one rule may be adapted differently for different types of data.

A seventh aspect of the invention relates to a communication network having means to modify a characteristic of a call server for use in a method according to either the first or second aspect.

Any of the features be suitably incorporated in any of the above aspects as would be apparent to a person skilled in the art.

### BRIEF DESCRIPTION OF THE DRAWINGS

The invention will now be described with reference to the accompanying drawings which are by way of example only and in which in:
Figure 1 sketches the key to symbols used in Figures 2 to 5;
Figure 2 sketches a inter-gateway connection established over a packet backbone network in a conventional network scenario;
Figure 3 sketches an alternative inter-gateway connection established when the network shown in Fig. 2 experiences simple failure/congestion along the packet backbone;
Figure 4 illustrates the effect of the packet backbone network shown in Figs. 2 and 3 experiencing severe failure/congestion;
Figure 5 illustrates an alternative inter-gateway connection established over the packet backbone network in accordance with the invention;
Figure 6 further illustrates how packet backbone related information is transferred from the call server and the network management configuration system according to the invention;
Figure 7 shows steps in a method of modifying a characteristic of a call server; and
Figures 8A and 8B show steps in a method of mitigating the impact of congestion over a packet backbone network on a call server.

### DETAILED DESCRIPTION OF PREFERRED EMBODIMENTS

One embodiment of the invention provides a call server for a network, for example, a packet backbone network. The call server is provided with means to receive information from a network management element of the network. The information received reflects the condition of the network. The call server is able to analyse and/or process the received information to change an internal characteristics, for example, to modify the call servers internal routing algorithm to adapt to the condition of the network. For example, the adaptation can be achieved by changing the rules by which the routing algorithm selects a network gateway to ensure access to a certain trunk group of the network is achieved.

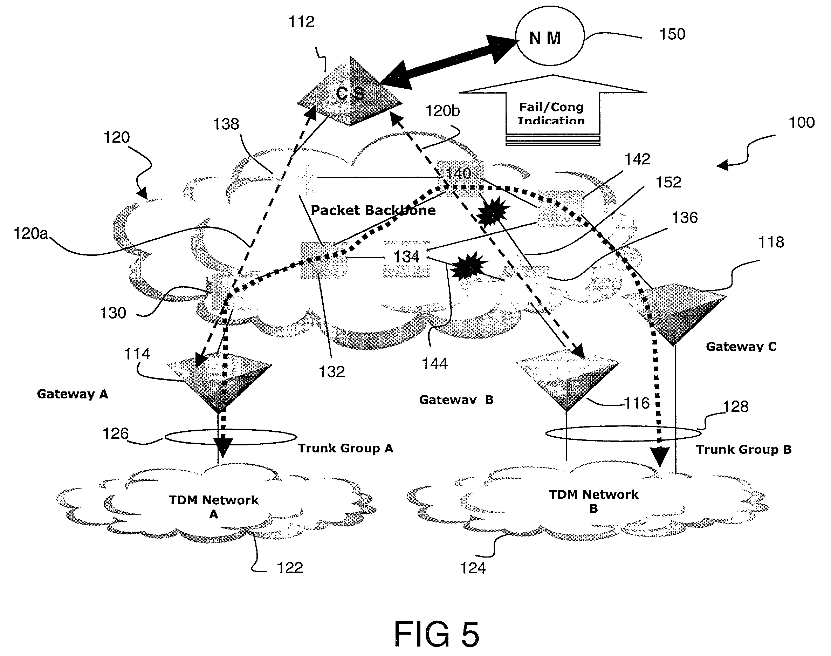

This embodiment is now described with reference to Fig. 5 of the accompanying drawings. In Fig. 5, a sketched network scenario similar to that shown in Fig. 4 is illustrated in which similar elements to those shown in Fig. 4 are prefixed by "1" in their numbering scheme.

In Fig. 5, a packet backbone network 120 is shown which has a number of trunk groups, for example, two trunk groups 126, 128. Trunk groups 126, 128 link the packet backbone network 120 to other networks, for example TDM networks 122, 124.

The network 120 is managed by at least one network management element, here network management element 150. Network management element 150 is capable of determining and/or monitoring at least one characteristic of the packet backbone network 120. For example, a performance characteristic, e.g., a traffic level characteristic, for example available bandwidth, link and/or node congestion and/or failure.

A call server 112 of the packet backbone network 120 shown in Fig. 5 is capable of receiving information on the condition of the packet backbone network 120. In Fig. 5, the network management element 150 is adapted to provide information to the call server 112 which enables the call server 112 to adapt to changes in the condition of the packet backbone network 120.

For example, the network management element 150 may provide information to the call server 112 which reflects a performance characteristic of the packet backbone network 120 such as mentioned above. This enables the call server 112 to alter at least one of its internal characteristics, for example, a routing algorithm, with the objective of routing traffic more efficiently over the packet backbone network 120.

The information provided by the network management element 150 may be sent periodically or dynamically in response to changing conditions of the packet backbone network 120. Alternatively, the call server 112 may actively request information from the network management 150. Alternatively, a performance characteristic of the packet backbone network 120 may be provided dynamically by the packet backbone network 120 and/or passively, in response to requests from the network management element 150 so that information can be passed on either directly to the call server 112, or via the network management element 150.

In Fig. 5, the call server 112 seeks to establish a connection between the two trunk groups 126, 128. The information which the call server 112 receives enables the call server 112 to modify its internal routing algorithm to adapt to the conditions over the network 120 to establish a connection between the two trunk groups 126,128.

Consider the scenario shown in Fig. 5, when a condition of links 144, 152 between the packet backbone network nodes 136 and 134 and 136 and 140 prevents the establishment of an inter-gateway connection between gateways 114 and 116. The condition may be a link failure or congestion, such as Fig. 5 illustrates, or any other condition affecting traffic over the link.

A connection is sought between TDM network A and TDM network B. In order to efficiently use the available network resources, the call server 112 is adapted to receive information from the network management element 150 which allows the call server to adapt to the congestion on links 144, 152. In the example illustrated in Fig. 5, the information enables the call server 112 to adapt its routing algorithm to use gateway 118 to reach trunk group 128.

The adaptation of the routing algorithm is achieved by conveying information to the call server 112. The information conveyed enables a modification to the call server's rule set to be made. The rule(s) modified select trunk group member(s) used to access a certain trunk group, i.e. they enable selection of an appropriate gateway to be used.

In one embodiment of the invention, the required modification to the rule set is determined by the network management 150 which is able to assess the impact of the congestion/failure of links 144, 152 on the performance of the call server 112. The rule set are modified so that the call server is optimised towards the available network resources, which in this example, enables traffic to be routed through the alternative gateway 118 providing access to trunk group 128.

The rule set comprises at least one rule and is used by the call server 112 to determine indicates the order the call server 112 should route to the egress network 124, i.e., TDM Network B. For example, a rule set might include;
rule # 1 = it should try Trunk Group B first; and
rule # 2, If Trunk Group B is unavailable, try a backup route provisioned.
In some embodiments of the invention, it may be appropriate for the network management element 150 to influence the condition upon which the call server 112 would decide to invoke rule #2. In one particular embodiment of the invention, at least one additional rule is associated with the selection of rule #1 (i.e. Trunk Group B in Fig. 5).

Once a route is selected, a rule #3 is executed which enables the call server 112 to identify the specific trunk member 116, 118 (or collection of trunk members) within the selected trunk group 128 . Rule #3 indicates that under normal conditions, a specific algorithm for choosing a trunk member within Trunk Group B exists and should be used. For example, MIDL (Most idle), i.e., select a trunk member that is historically frequently used; LIDL (least idle), i.e., select a member that is historically infrequently used; Linear, select the first unused trunk, starting at the lowest trunk identifier index; and Linear_alt, which is similar to Linear except that the lowest/highest trunk identifier indexes are selected from. This list is not exhaustive, and other examples of rule # 3 exist such as are known to the skilled man in the art.

The network management element 150 indicates to the call server 112 that this rule #3 for the particular trunk group, here trunk group B, needs to be modified in a manner that causes it to select only members that conform to the new rule attributes. For example, depending on how the trunk members are assigned that could mean that a given range is now no longer selected, or some other variation. The call server 112 replaces the existing (i.e. default) rule attributes with the attributes received from the netwrok management element 150. The information received is processed by a high priority task (but not as high a priority as call processing task) by the call server 112, to ensure that the rule(s) is(are) updated as quickly as possible to reduce the impact of the network event.

Thus in Fig. 5, the call server 112 is adapted by the network management 150 to request a connection betweeen gateways 114, 118., e.g., to request gateway 118 to establish a connection with gateway 114. Gateways 114, 118 are able to establish an inter-gateway connection via network nodes 130, 132, 140, and 142, which negotiates around the link failure/congestion between nodes 136 and 134, and nodes 136 and 140.

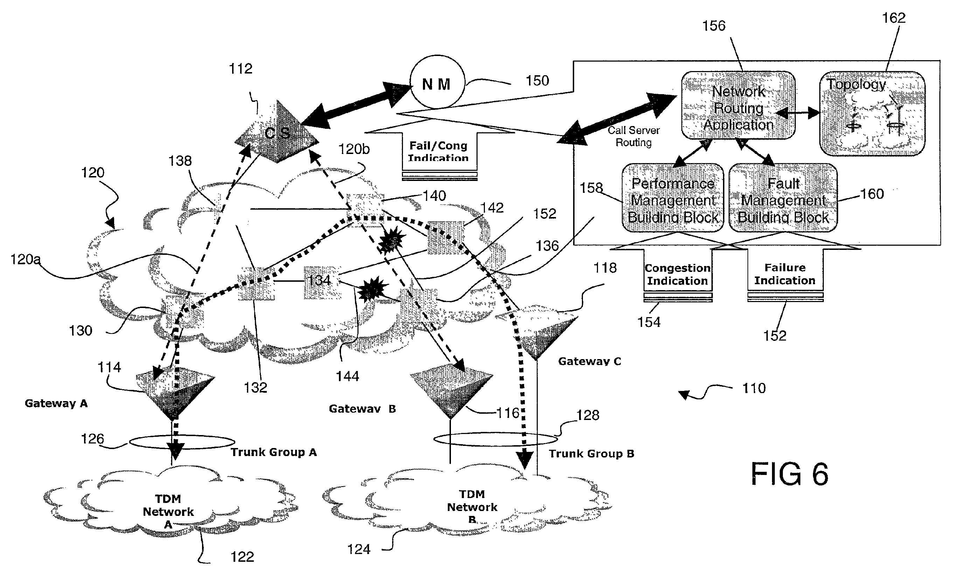

The network management element 150 processes information relating to the performance and/or fault management of the network. Various embodiments of the invention may involve the network management element 150 receiving and processing information continuously, periodically or aperiodically, i.e., in response to a change in network condition. . The network management element 150 is aware of the topology of the network, and so can assess the impact of any congestion and/or failure indications it receives on the network. Thus, referring now to Fig.6, in which a failure indication 152 and congestion indication 154 provide information to the network routing application 156, the network management 150 is able to determine the impact of the failure/congestion of link indications 152, 154 provided by the packet backbone network 120 due to the failure/congestion of links 144,152.

The network management element 150 is able to analyse the network using its applications such as a network routing application 156 which interfaces with performance management 158 and/or fault management 160 applications and topology models 162 of the network. In this way, the network management 150 can determine the condition of the network 120 such as, for example, which links are congested, what is the available bandwidth over a link, when the network topology changes or is updated as a new link, trunk group, or gateway is added, and/or trunk group accessibility, etc.

The network management element 150 is thus able to interface with the call server 112 and provide the call server 112 with sufficient information for the call server 112 to use the available network resources efficiently.

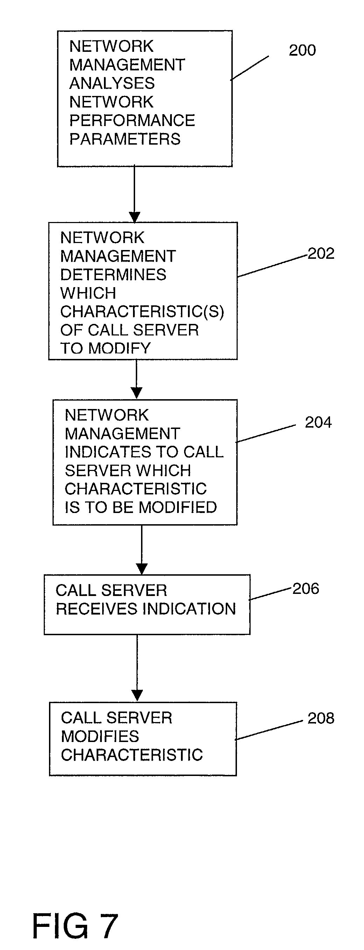

Referring now to Fig. 7, steps in the process by which a call server is optimised to use available network resources is shown schematically. In Fig. 7, the network management element 150 adapts a characteristic of the call server 112 using the following steps:
i) the network management 150 assesses the condition of the packet backbone network 120, for example by analysing certain performance characteristics of the network (step 200);
ii) the impact of the network's condition on the performance of the call server 112 is assessed by the network management element 150 and the network management element 150 determines which characteristics of the call server need to be modified (step 202);
iii) the network management then sends an indication to the call server which provides sufficient information to enable the call server to modify at least one characteristic (step 204);
iv) the call server 112 receives the indication from the network management 150 (step 206);
v) the call server 112 processes the indication and modifies the characteristic(s) indicated (step 208) accordingly.

The indication from the network management 150 is sent as a simple instruction to the call server 112 to change a particular element, for example, a rule in the routing algorithm of the call server. Alternatively, the call server 112 may be sent an objective/information item by the network management 150 which the call server uses to reconfigure itself.

For example, the network management may indicate that the gateway capacity has increased, or that a new gateway has been added, or that a trunk group can be accessed by an alternative gateway .

In one embodiment of the invention, the call server 112 is able to respond to the dynamic changes of the packet backbone network 120 without any additional network analytical functionality of the call server 112 being required. The analysis of the packet backbone network 120 is performed by the network management element150 and the call server 112 is adapted merely by receiving an appropriate instruction/instruction set from the network management element 150.

The network management 150 may monitor the performance characteristics of the network and send appropriate indications to the call server 112 continuously, periodically or aperiodically depending on the desired performance requirements of the network 120.

In one embodiment of the invention, the network management 150 polls the packet network 120 periodically and is also able to react to asynchronous inputs from the packet backbone reflecting changes its condition.

The call server 120 can thus adapt any suitable characteristic, for example, its routing algorithm in the case where link failure or congestion has occurred, or its overall call carrying capacity, providing the network management 150 has been able to provide a suitable indication on how the call server is to optimise that characteristic. This is the case whenever a call server characteristic is determined by a set of operation or engineering rules which the network management 150 can alter. Thus the call server 112 can modify its call processing scheduler or its call origination rate for example, in response to an appropriate rule change being indicated by the network management 150.

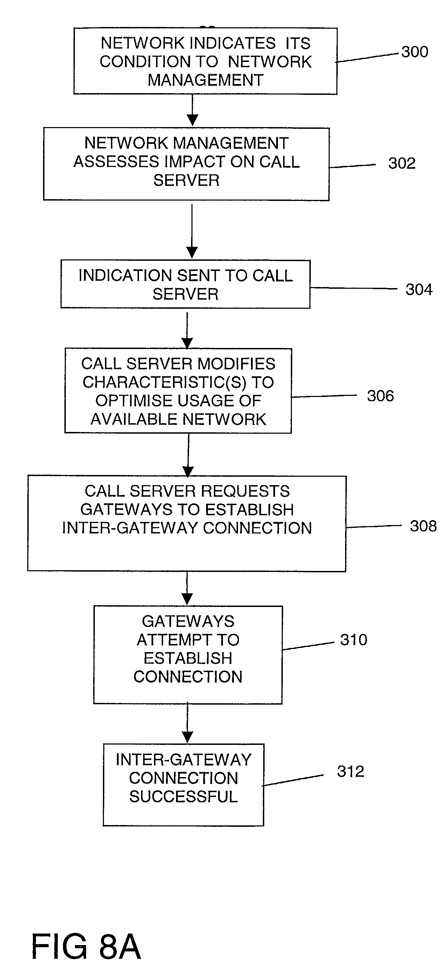

Referring now to Fig. 8A, any asynchronous network event such as a link failure or congestion condition initiates a reaction in the call server via the following sequence:-
i) the packet backbone 120 indicates to the network management 150 the event that has occurred - link congestion (step 300);
ii) the network management 150 *inter alia* analyses the performance parameters indicated - e.g., where the link congestion has occurred; and determines the impact on the call server 112 - e.g., that gateway 116 is not accessible (step 302);
iii) the network management 150 sends an indication to the call server 112 to adapt at least one of the characteristics of the call server with a view to optimising the call server's performance (step 304); and
iv) the call server receives and processes the indication by adapting the said at least one characteristic - e.g., its routing algorithm (step 306).

For example, referring back to Figs. 5 & 6, consider the case where congestion has occurred between nodes 136 and 134, and nodes 136 and 140 of the packet backbone network 120, reducing the available bandwidth over links 144 and 152.

The network management 150 assesses in step 302 what the impact of the two congested links 144 and 152 is on the caller server 112. In this example, the call server 112 can no longer able to access gateway 116.

The network management 150 can determine that the call server 112 wishes to connect trunk group 126 to trunk group 128, and can also determine that gateway 118 provides alternative access to trunk group 128. Accordingly the network management 150 determines that the call server's routing algorithm is the characteristic of the call server 112 which is to be adapted. The network management indicates to the call server 112 to modify its routing algorithm and/or other characteristics of the call server which could be adapted to optimise the call server's performance.

In the case of congestion along links 144 and 152, the indication sent may provide the call server 112 with enough guidance to recognise that members of trunk route B on gateway B have restricted availability. The trunk selection algorithm is adjusted accordingly by the call server 112 without any information on the state or configuration of the packet backbone being provided to the call server. In alternative embodiments, however, the indication may provide some state or configuration information to the call server.

When the call server 112 receives an indication that the packet backbone network 120 is experiencing failure/congestion, the call server 112 is able to reset its trunk selection algorithm to select an alternative trunk member. In this example, the call server 112 requests gateway 118 and the other gateway 114 to establish an appropriate inter-gateway connection (step 308). As this gateway has already been established by the network management to be accessible in step 302, the call server does not attempt to request gateways 114 and 116 to establish a connection. Gateways 114, 118 are able to establish a successful connection (steps 310, 312).

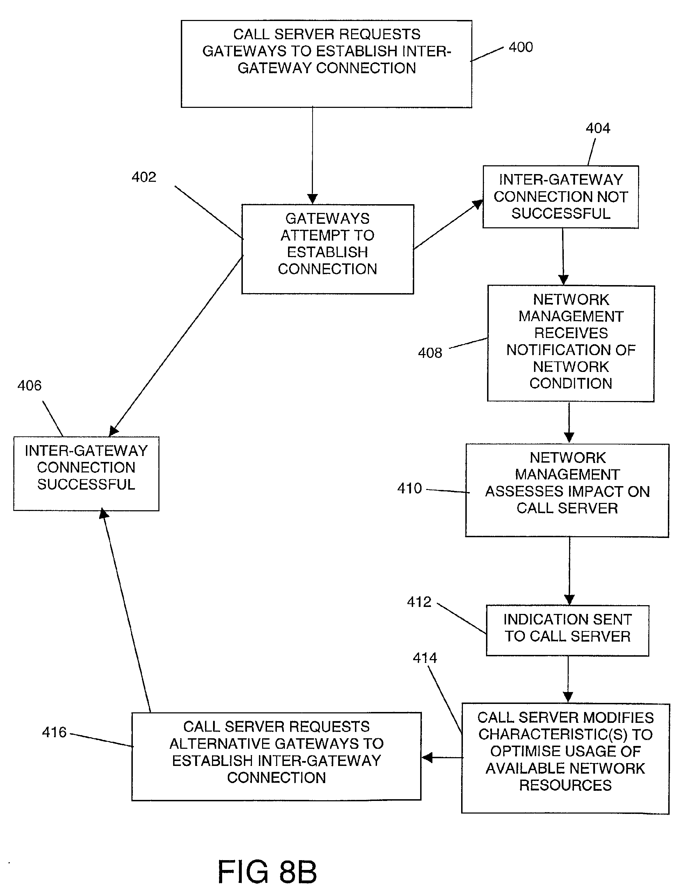

Alternatively, the call server may first attempt to interconnect two gateways, such as gateways 114, 116 as Fig. 8B shows. Here, in the event that the two gateways 114, 116 cannot establish a connection, the network management element 150 intervenes to ensure that the call server 112 resets its characteristics appropriately. For example, the trunk selection algorithm may be reset to use another range of trunk members where call attempts are failed by the gateways 114,116, and thereby access the trunk group 128 via gateway 118. Each trunk member is assigned a static Circuit Identification Code number, thus by indicating a rule change which resets the CIC range or which provides a specific CIC, the network management element 150 is able to act as an intermediary between the call server 112 and the packet backbone network 120 which enables the call server to respond appropriately to the condition of a network.

In the preferred embodiment of the invention, the indication send by the network management element 150 contains instructions to modify specific engineering rule(s) which are able in this example to segment trunk members (gateways 116, 118) within the trunk group 128 and to override any random trunk assignment mechanism.

In another preferred embodiment of the invention, the network management 150 has access to trunk group/member provisioning applications, and is able to correlate congestion with individual trunk group/member physical locations. This enables the call server 112 to be provided with proactive routing updates which enable it to minimise the number of call failures.

In yet another preferred embodiment of the invention, the network management may provide an indication which is packet and/or bandwidth specific. For example, an indication that packets of bandwidth "x" are experiencing congestion to gateway Y, accordingly update routing algorithm for packets of bandwidth "x" to ensure that they are routed via alternative gateway Z.

The ability to provide packet specific indications of the condition of the packet backbone network 120 is highly advantageous. The call server 120 is able to modify its characteristic(s) not only to suit the condition of the packet backbone generally but also to suit the nature of the traffic which the call server is routing over the packet backbone.

Advantageously, the invention enables the call server's usage of available resources to be optimised in a manner which enables the call server to react to various dynamic packet backbone characteristics, for example, such as congestion of the packet backbone.

In the above description numerous specific details are set forth in order to provide a thorough understanding of the invention. It will be apparent however, to one skilled in the art, that the present invention may be practiced without limitation to these specific details. In other instances, well known methods and structures have not been described in detail so as not to unnecessarily obscure the present invention.

For example, whilst reference has been made explicitly to a packet backbone network, the invention can be adapted in a manner obvious to those skilled in the art to other networks. Moreover, the invention may be implemented by any suitable combination of hardware and/or software. The adaptation provided by the invention may affect the characteristic of the invention for a finite period of time, or until the condition of the network changes or reverts back to its operation state, or be permanent pending a further indication being sent by the network management 150.

## Claims

1. A method of adapting a routing algorithm used by a call server connected to a communications network comprising the steps of:
detecting a change in at least one condition of the communications network;
analyzing the change to determine whether the routing algorithm requires adaptation to accommodate said change;
and, in the case of the routing algorithm requiring adaptation,
providing an indication of the required adaptation to the call server; and
receiving the indication at the call server and adapting the routing algorithm used by the call server in response to said indication.

2. A method as claimed in claim 1, wherein in the step of providing an indication of the required adaptation, the indication provides an indication of at least one rule governing the routing algorithm which is to be adapted.

3. A method as claimed in either claim 1 or claim 2, wherein in the step of analyzing the change in condition, the change in the level of congestion over the network is analyzed.

4. A method as claimed in claim 1 or claim 2, wherein in the step of analyzing the change in condition, the change in the topology of the network is analyzed.

5. A method as claimed in claim 1 or claim 2, wherein in the step of analyzing the change in condition, the change in the available bandwidth over at least a portion of the network is analyzed.

6. A method as claimed in any preceding claim, wherein the step of analyzing said change is performed and the step of providing the indication occur dynamically.

7. A method as claimed in any preceding claim, wherein the step of analyzing said change includes assessing the impact of the change in the at least one condition on a future condition of the network.

8. A method as claimed any preceding claim, wherein at least one condition occurs on the packet backbone of the communications network.

9. A method as claimed in any preceding claim, wherein the method enables the call server to use available network resource more efficiently.

10. A method as claimed in any preceding claim, wherein in the step of detecting a change in the condition of the communications network, the type of traffic affected is determined, wherein the type of data is determined by the bandwidth of the data.

11. A method of modifying at least one characteristic of a call server in a communications network which includes a network management element capable of monitoring a condition of the network, the method comprising:
generating an indication of the condition of the network providing sufficient information for the call server to utilise available network resources;
sending the indication to the call server;
receiving at the call server the indication of the condition of the network; and
modifying said at least one characteristic in accordance with said indication to enable the call server to utilise the available network resources.

12. A method as claimed in claim 11, wherein the method further comprises the initial step of the call server requesting information from the network management element.

13. A method as claimed in claim 11 or claim 12, wherein said network is a packet backbone network and said at least one characteristic of the call server includes a routing algorithm, and wherein in the step of generating the indication, at least one informational element is provided which indicates at least one rule to be adapted according to the condition of the network, said rule being used in said routing algorithm to determine which gateways the call server shall to use to connect a plurality of trunk groups over the packet backbone network.

14. A network management element capable of determining a condition of a communications network and capable of communicating said condition with a call server connected to the network for use in a method of adapting a routing algorithm used by a call server connected to a communications network, the method comprising the steps of detecting a change in at least one condition of the communications network; analyzing the change to determine whether the routing algorithm requires adaptation to accommodate said change; and, in the case of the routing algorithm requiring adaptation, providing an indication of the required adaptation to the call server; and
receiving the indication at the call server and adapting the routing algorithm used by the call server in response to said indication, the network management element being adapted to correlate information received from a packet backbone network relating to the condition of the network with an instruction set comprising at least one informational element, each informational element providing an instruction to a call server to modify at least one of the characteristics of the call server so as to optimise the manner in which the call server utilises the available resources of the packet backbone network.

15. A call server adapted for use in a method of adapting a routing algorithm used by the call server connected to a communications network, the method comprising the steps of: detecting a change in at least one condition of the communications network; analyzing the change to determine whether the routing algorithm requires adaptation to accommodate said change; and, in the case of the routing algorithm requiring adaptation, providing an indication of the required adaptation to the call server; and receiving the indication at the call server and adapting the routing algorithm used by the call server in response to said indication, wherein the call server includes:
a receiving element for interfacing with said indication;
an processing element for processing information provided by said indication; and
a routing algorithm adapting element for adapting said routing algorithm.

16. A computer program arranged to: detect a change in at least one condition of a communications network; to analyze the change to determine whether a routing algorithm provided in a caller server connected to said communications network requires adaptation to accommodate said change; and, in the case of the routing algorithm requiring adaptation, to provide an indication of the required adaptation to the call server; and to adapt the routing algorithm used by the call server in response to said indication, wherein the routing algorithm is operable in accordance with a set of rules which determine route selection over a communication network, at least one rule capable of being adapted in response to the call server receiving an indication relating to the adaptation of the said at least one rule.

17. A computer programe as claimed in claim 16, wherein the rules may be adapteddifferently for different types of data.

18. A computer program as claimed in either claim 16 or 17 wherein the computer program is implemented in software and/or in hardware.

19. A communication network having means to modify a characteristic of a call server for use in a method of adapting a routing algorithm used by a call server connected to a communications network, the method comprising the steps of: detecting a change in at least one condition of the communications network; analyzing the change to determine whether the routing algorithm requires adaptation to accommodate said change; and, in the case of the routing algorithm requiring adaptation, providing an indication of the required adaptation to the call server; and receiving the indication at the call server and adapting the routing algorithm used by the call server in response to said indication.
